# EUROPEAN PATENT APPLICATION

(11) **EP 4 836 175 A1**
(43) Date of publication of application: **04.11.2026**
(21) Application number: 25822249.6
(22) Date of filing: 11.06.2025
(51) Int. Cl.: H01M 50/55, H01M 50/152, H01M 50/179, H01M 50/566, H01M 50/169, H01M 50/186, H01M 50/559, H01M 10/625, H01M 10/643

(54) **CYLINDRICAL BATTERY CELL CAPABLE OF BOTTOM COOLING**

(30) Priority: 11.06.2024 KR 20240075533
(71) Applicant: LG Energy Solution, Ltd., Seoul 07335 (KR)
(72) Inventor: JO, Min-Ki, Daejeon 34122 (KR); KO, Kwang-Hun, Daejeon 34122 (KR); KIM, Do-Gyun, Daejeon 34122 (KR); JUNG, Sang-Suk, Daejeon 34122 (KR)
(74) Representative: Goddar, Heinz J.
(86) International application number: PCT/KR2025/007979
(87) International publication number: WO 2025/258995

(57) **Abstract**

The present disclosure relates to a cylindrical battery cell having a structure capable of rapid cooling through a cap at a lower end portion of a can. The battery cell includes a can having a sidewall portion extending in an axial direction, an opening present at a first end portion of the sidewall portion in the axial direction, and a bottom portion connected to a second end portion of the sidewall portion in the axial direction; an electrode assembly having a first electrode and a second electrode, the electrode assembly housed in the can; a current collector plate including a central portion and a circumferential portion disposed around the central portion, the current collector plate electrically connected to the electrode assembly; and a cap covering the opening of the can, and including a body portion and an edge portion, wherein the bottom portion includes at least one notching vent portion, wherein the central portion is electrically connected to a second electrode of the electrode assembly, wherein the circumferential portion contacts the first end portion of the sidewall portion and the edge portion of the cap, and wherein the first end portion of the sidewall portion, the edge portion of the cap and the circumferential portion are electrically connected to each other.

## Description

### TECHNICAL FIELD

The present disclosure relates to a cylindrical battery cell, and more particularly, to a cylindrical battery cell having a structure capable of rapid cooling through a cap at a lower end portion of a can.

This application is based on and claims priority from Korean Patent Application No. 10-2024-0075533 filed on June 11, 2024 with the Korean Intellectual Property Office, the disclosure of which is incorporated herein in its entirety by reference.

### BACKGROUND

With the widespread use of electric vehicles, cylindrical battery cells having cylindrical battery cans as housings are increasing in capacity. In addition, as battery cell size increases, it is possible to place first and second electrode terminals on the upper surface of cylindrical battery cells. When the two electrode terminals are positioned at the upper end portion of the battery cells, the cylindrical battery cells may be arranged in upright position, and all busbars for the two electrode terminals may be positioned at the upper end portion of the battery cells, leading to a simpler structure of a vehicle battery pack.

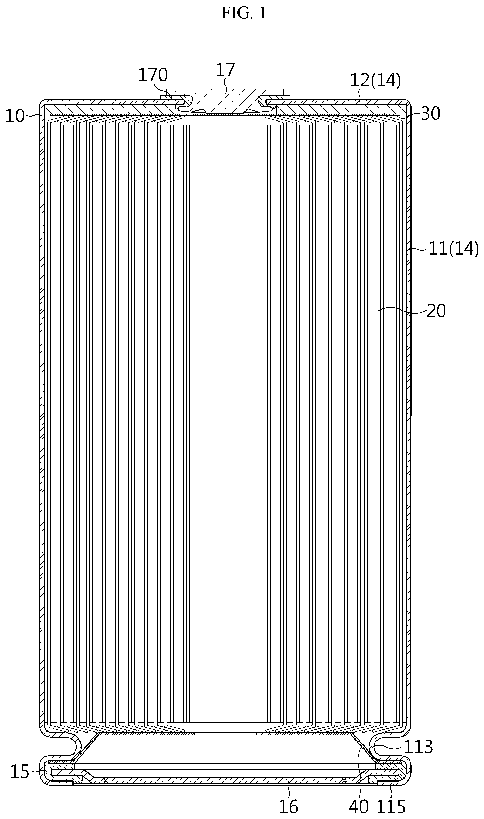

Referring to FIG. 1, the can 10 of the large-capacity cylindrical battery cell has a bottom portion 12 at the upper end portion and an opening at the lower end portion of a sidewall portion 11. A first electrode terminal 17 is installed at the central portion of the bottom portion 12 with a terminal gasket 170 interposed between them to create an airtight seal.

When an electrode assembly 20 is housed in the can 10, a first current collector plate 30 joined to a first electrode of the electrode assembly 20 is joined and electrically connected to the first electrode terminal 17, and a second current collector plate 40 joined to a second electrode of the electrode assembly 20 is joined and electrically connected to a beading portion 113 at the lower end portion of the sidewall portion 11 of the can 10. Accordingly, the bottom portion 12 and the sidewall portion 11 may form a second electrode terminal 14.

A cap 16 is secured to the lower end portion of the sidewall portion 11 to close the opening of the can 10. The edge of the cap 16 is installed and compressed between the beading portion 113 and a crimping portion 115 of the sidewall portion 11 with a cap gasket 15 interposed therebetween. The cap 16 may be non-polar because it is not polarized by the cap gasket 15.

However, because the battery cell has the cap 16 at the lower end portion of the can 10 and an air gap between the cap 16 and the electrode assembly 20 acts as a thermal insulation layer, when the battery cells are placed in the battery pack in upright position, bottom cooling of the battery cells is impossible.

Accordingly, the above-described battery cell structure uses side cooling through the sidewall portion 11. This battery cell cooling method has the limited degree of freedom in design of the battery pack. For example, it is impossible to apply the battery pack structure capable of bottom cooling.

### DISCLOSURE

### Technical Problem

The present disclosure is designed to solve the above-described problems, and therefore the present disclosure is directed to providing a battery cell having a first electrode terminal and a second electrode terminal at the upper end portion and a structure capable of bottom cooling.

The present disclosure is further directed to providing a battery cell with high energy density.

The present disclosure is further directed to providing a battery pack including battery cells having first electrode terminals and second electrode terminals at the upper end portion and allowing for bottom cooling, and a vehicle including the battery pack.

The technical problems of the present disclosure are not limited to the aforementioned problems, and these and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

### Technical Solution

To solve the above-described problems, the present disclosure may be applied to a cylindrical battery cell in which both a first electrode terminal and a second electrode terminal are provided at a first end portion in an axial direction.

The battery cell may include a can having a sidewall portion extending in the axial direction, an opening present at the first end portion of the sidewall portion, and a bottom portion connected to a second end portion of the sidewall portion.

The can may have a cylindrical shape.

The battery cell may have the first electrode terminal electrically insulated from the can and installed through a hole present in the can.

The first electrode terminal may be disposed at a central portion of the bottom portion.

The battery cell may include an electrode assembly including a first electrode and a second electrode, wherein the electrode assembly is housed in the can and a surface facing the bottom portion is supported in contact with the bottom portion.

The bottom portion may include at least one notching vent portion.

The battery cell may include a cap covering the opening of the can, the cap including a body portion and an edge portion.

The electrode assembly may have a structure in which the first electrode and the second electrode are wound around a winding core hollow portion extending in the axial direction with a separator interposed between the first electrode and the second electrode.

The battery cell may include a first electrode plate including a first electrode connection portion electrically connected to the first electrode of the electrode assembly, and a first terminal connection portion electrically connected to the first electrode terminal.

The battery cell may include a current collector plate including a central portion and a circumferential portion disposed around the central portion, the current collector plate electrically connected to the electrode assembly. The current collector plate may be a second current collector plate. The central portion may include a second electrode connection portion electrically connected to the second electrode of the electrode assembly, and the circumferential portion may include a second terminal connection portion disposed at an outer side of the second electrode connection portion in a radial direction. The second current collector plate may include a bridge including a step portion disposed at the outer side of the second electrode connection portion in the radial direction, the step portion being offset outwards from the second electrode connection portion in the axial direction, the bridge extending in the radial direction, and the second terminal connection portion extending outward in the axial direction from an outer end portion of the bridge in the radial direction.

An outer circumferential surface of the second terminal connection portion may contact an inner circumferential surface of the sidewall portion.

An end portion of the second terminal connection portion in the axial direction may contact the edge portion of the cap, facing each other in the axial direction.

A thickness of the edge portion may be smaller than a thickness of the body portion.

The edge portion may be disposed at a corresponding location to an outer position in the radial direction than the step portion of the bridge of the second current collector plate in the radial direction.

The battery cell may include the first electrode terminal electrically insulated from the can and installed through the hole present in the can.

The first end portion of the sidewall portion, the edge portion of the cap and the circumferential portion may be electrically connected to each other. The first end portion of the sidewall portion, the edge portion of the cap and the circumferential portion of the current collector plate may be welded to each other.

The notching vent portion may have a smaller thickness than a thickness of the adjacent bottom portion.

An outer circumferential surface of the edge portion of the cap and an inner circumferential surface of the sidewall portion, facing each other in the radial direction, may be joined by the welding.

The edge portion of the cap may be welded and electrically connected to the circumferential portion of the second current collector plate.

The present disclosure provides a battery pack including the above-described battery cell, and a pack case accommodating the battery cell.

The battery cell may be placed in the pack case such that the cap contacts a bottom of the pack case and the first electrode terminal faces upward.

A cooling structure for cooling the battery cell through the cap of the battery cell may be present at the bottom of the pack case.

The present disclosure provides a vehicle including the above-described battery pack, wherein the vehicle is powered by a power source from the battery pack.

### Advantageous Effects

Because the battery cell of the present disclosure has the first electrode terminal installed at the bottom portion of the can positioned at the upper end portion to achieve insulation and create an airtight seal, both the first electrode terminal and the second electrode terminal are positioned at the upper end portion.

The present disclosure has a structure capable of bottom cooling of the electrode assembly because the surface of the electrode assembly facing the cap positioned at the lower end portion contacts the cap at the lower end portion of the battery cell.

Because the second electrode is bent inward in the radial direction from the second end portion of the electrode assembly and comes into contact with the cap through the second current collector plate, the battery cell of the present disclosure may quickly dissipate heat generated from the electrode assembly through the bottom of the battery cell via the second electrode, the second current collector plate and the cap in a sequential order.

Because the battery cell of the present disclosure has the notching vent portion in the bottom portion positioned at the upper end portion, the cap positioned at the lower end portion may be manufactured with a larger thickness, thereby increasing the bulging resistance of the cap against the internal pressure of the can, and achieving rapid heat conduction through the thick cap, making bottom cooling easy.

Because the battery cell of the present disclosure has the edge portion of the cap with a smaller thickness than the body portion and the circumferential portion of the second current collector plate that is offset from the electrode assembly in the axial direction, most of heat generated when welding the cap may be transferred to the thick cap, thereby reducing the transfer of heat from the circumferential portion of the second current collector plate to the electrode assembly, and minimizing the influence of welding heat on the electrode assembly.

The battery pack including the battery cell of the present disclosure may have a bottom cooling structure.

In addition to the above-described effects, specific effects of the present disclosure will be described below together with the detailed description of the embodiments.

### BRIEF DESCRIPTION OF THE DRAWINGS

The accompanying drawings illustrate the exemplary embodiments of the present disclosure and together with the aforementioned description, serve to provide a better understanding of the technical aspects of the present disclosure, and thus the present disclosure is not construed as being limited to the drawings. In the drawings, for clarity of description, the shape, size, scale or proportion of the elements may be exaggerated for emphasis.
FIG. 1 is a cross-sectional view showing a type of cylindrical battery cell for comparison.
FIG. 2 is an exploded perspective view of an electrode assembly before winding; the electrode assembly will be housed in a can of FIG. 1.
FIG. 3 is a perspective view of the electrode assembly of FIG. 2 in a laminated state before winding.
FIG. 4 is a perspective view of a cylindrical jelly-roll type electrode assembly in an assembled state by winding the laminate of FIG. 3.
FIG. 5 is a perspective view showing a first current collector plate joined to an electrode assembly.
FIG. 6 is a perspective view showing a second current collector plate joined to an electrode assembly.
FIG. 7 is a cross-sectional view showing an electrode assembly inserted into a can such that a first current collector plate faces and contacts a bottom portion and a second current collector plate is positioned at an opening.
FIG. 8 is a cross-sectional view showing a second current collector plate, a sidewall portion near an opening and an edge portion of a cap joined together.
FIG. 9 is a diagram showing a battery pack including the battery cell of FIG. 8 within a pack housing.
FIG. 10 is a diagram showing a vehicle including the battery pack of FIG. 9.

### BEST MODE

Hereinafter, the present disclosure will be described in detail with reference to the accompanying drawings. It should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure and are not intended to be limiting, so it should be understood that many other equivalents and modifications could be made thereto at the time the application was filed.

It should be understood that "including", "comprising" or "having" when used in this specification, specifies the presence of the stated elements, but does not preclude the presence or addition of one or more other elements unless otherwise expressly stated.

The terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, the terms related to positions or directions such as "upper", "lower", "left", "right", "inner" and "outer" may indicate directions in the drawings to which reference is made and should not be limiting. The terms "inner" and "outer" indicate directions toward or away from the geometric center of the designated device, system and their elements, respectively. These terms include the listed words, their derivatives, and words of similar meanings.

In this specification, when an element is referred to as being present "on" another element, it can be in contact with the other element and intervening elements may be present.

The above-described objectives, features and advantages will be described in detail below with reference to the accompanying drawings, and accordingly those skilled in the art will easily carry out the technical aspects of the present disclosure. In describing the present disclosure, when it is determined that a detailed description of related known technology may unnecessarily obscure the subject matter of the present disclosure, its detailed description is omitted. Hereinafter, an exemplary embodiment according to the present disclosure will be described in detail with reference to the accompanying drawings. In the drawings, the same reference numerals are used to indicate the same or similar elements.

Although the terms first, second, etc. are used to describe different elements, these elements are not limited by the terms. The terms are simply used to distinguish one element from another, and unless otherwise expressly stated, a first element may be a second element.

Throughout the specification, unless otherwise expressly stated, each element may be singular or plural.

Hereinafter, an element "on (or below)" another element may represent that it can be in contact with an upper surface (or a lower surface) of the other element, and intervening elements may be present.

Additionally, when an element is referred to as being "connected to", "coupled to" or "contact" another element, it should be understood that it can be directly connected to or contact the other element, and intervening elements may be present, or each element may be "connected to", "coupled to" or "contact" each other through another element.

The singular forms as used herein include the plural forms unless the context clearly indicates otherwise. The term "comprising" or "including" as used herein should not be construed as necessarily including all the elements or steps described in this specification, and should be construed as not including some of the elements or steps, or further including additional elements or steps.

Throughout the specification, "A and/or B" refers to either A or B, or both unless otherwise expressly stated, and "C to D" refers to C or more and D or less unless otherwise expressly stated.

In describing an embodiment, an axial direction refers to an extension direction of an axis that forms a winding center of a jelly-roll type electrode assembly, a radial direction refers to a direction toward or away from the axis, and a circumferential direction refers to a direction surrounding the axis.

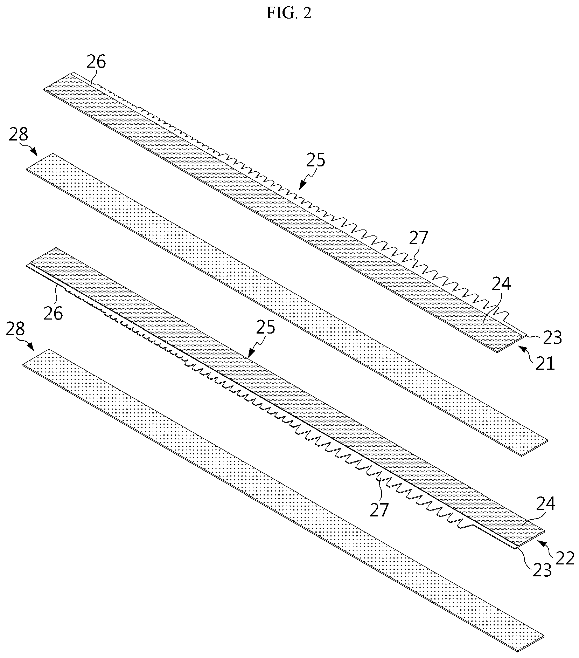

Hereinafter, a battery cell according to an aspect of the present disclosure will be described with reference to FIGS. 2 to 8.

Referring to FIGS. 2 to 8, the battery cell according to an embodiment of the present disclosure includes an electrode assembly 20, current collector plates 30, 40 electrically connected to the electrode assembly 20, and a can 10 accommodating the electrode assembly 20 and the current collector plates 30, 40. The battery cell may include a cylindrical battery cell.

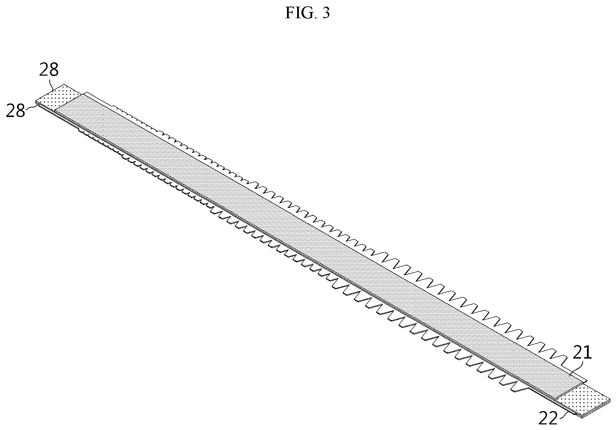

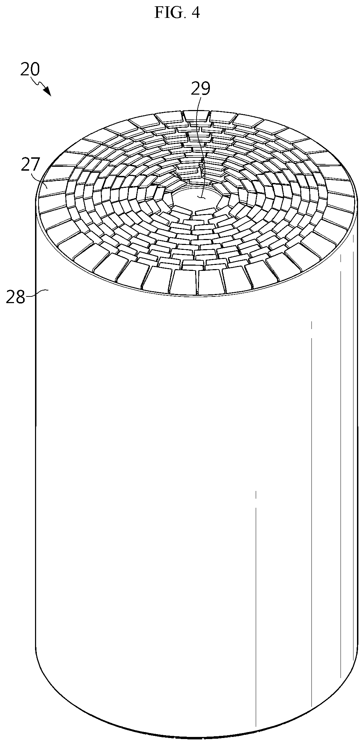

The electrode assembly 20 is manufactured by preparing a first electrode 21, a second electrode 22 and a separator 28 extending in the length direction with a predetermined width as shown in FIG. 2, laminating the first electrode 21, the separator 28, the second electrode 22 and the separator 28 in that order to form a laminate as shown in FIG. 3, and winding the laminate around a winding axis into a jellyroll shape as shown in FIG. 4.

The first electrode 21 may be a positive electrode and the second electrode 22 may be a negative electrode, or vice versa.

The first electrode 21 and the second electrode 22 are manufactured in a sheet form. The electrode sheet is manufactured by applying an active material layer 24 to the surface of a metal foil 23. The electrode sheet has a coated portion 25 area where the active material layer 24 is present and an uncoated portion 26 area where the active material layer 24 is absent. The positive electrode sheet has the uncoated portion 26 area at one side in the width direction, and the negative electrode sheet has the uncoated portion 26 area at the other side in the width direction.

The uncoated portion 26 area is an exposed or protruded portion of the laminate in the width direction. The uncoated portion 26 itself acts as an electrode tab 27.

The uncoated portion 26 is notched at a predetermined interval to form flagshaped notching tabs 27.

In an embodiment, the notching tabs 27 have an equilateral trapezoidal shape by way of illustration. However, the notching tabs 27 may come in many different shapes, for example, semicircular, semi-elliptical, triangular, rectangular or parallelogram shapes.

Additionally, in an embodiment, the notching tabs 27 arranged along the length direction have the same width by way of illustration. However, the width of the notching tabs may increase gradually or stepwise from the winding core to the outer circumference.

Furthermore, in an embodiment, the height of the notching tabs 27 gradually increases from the winding core to the outer circumference by way of illustration. However, the height of the notching tabs may be constant or gradually decrease.

In addition, in an embodiment, the notching tabs 27 are deleted from a predetermined part of the centripetal side end portion of the uncoated portion 26 and a predetermined part of the centrifugal side end portion of the uncoated portion 26 by way of illustration. However, the notching tabs may not be deleted from the centripetal side end portion of the uncoated portion, and the notching tabs may not be deleted from the centrifugal side end portion of the uncoated portion, or both.

In the jelly-roll type electrode assembly 20, the notching tabs 27 may be bent in the radial direction and flattened as shown in FIG. 4. The notching tabs 27 may be bent inward or outward in the radial direction. In an embodiment, the notching tabs 27 are bent inward in the radial direction by way of illustration.

The notching tabs 27 may be bent one by one in the process of winding the laminate to form the jelly-roll type electrode assembly 20. In contrast, the notching tabs 27 may be bent all at once after winding the laminate to form the jelly-roll type electrode assembly 20.

The notching tabs 27 of the first electrode 21 and the notching tabs 27 of the second electrode 22 bent in the radial direction and positioned one over another may provide a first plane and a second plane substantially perpendicular to the axial direction at two end portion of the electrode assembly 20 in the axial direction, respectively.

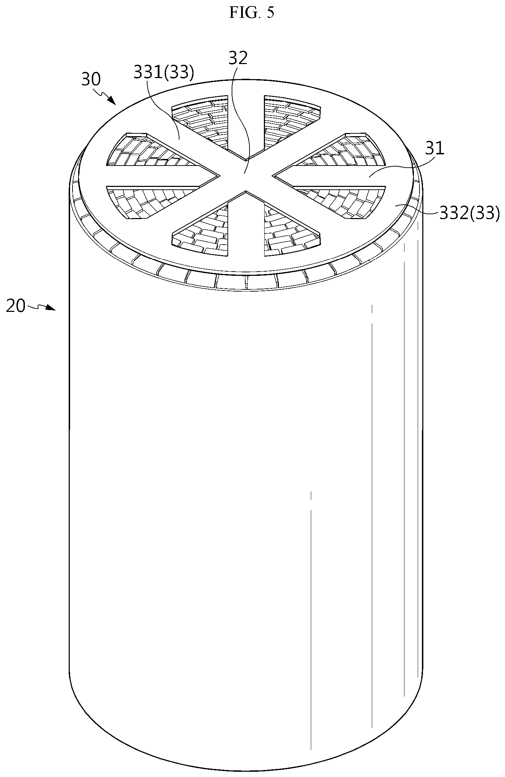

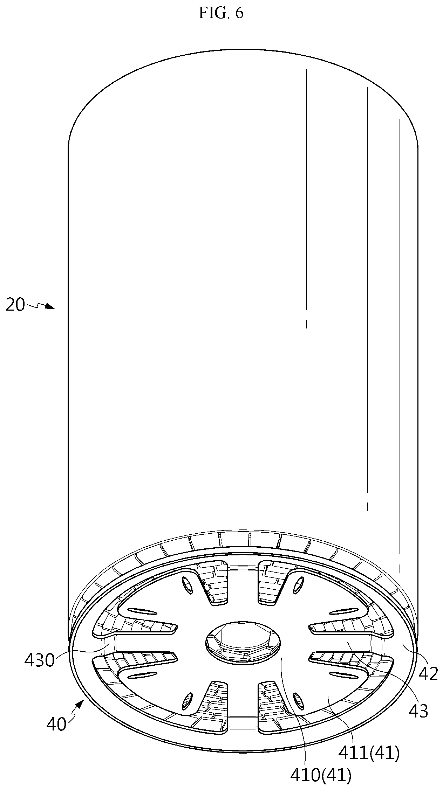

The first current collector plate 30 and the second current collector plate 40 may be joined to the first surface and the second surface which are substantially flat, provided by bending the exposed notching tabs 27 through the two end portions of the electrode assembly 20 in the axial direction, respectively, as shown in FIGS. 5 and 6.

In an embodiment, the first current collector plate 30 is a positive current collector plate, and the second current collector plate 40 is a negative current collector plate by way of illustration. However, the first current collector plate 30 may be a negative current collector plate, and the second current collector plate 40 may be a positive current collector plate.

The second current collector plate 40 may include copper, and the first current collector plate 30 may include aluminum. However, the materials are not limited thereto.

The current collector plates 30, 40 may be manufactured by punching, trimming, piercing and bending of a metal sheet.

Referring to FIG. 5, the first current collector plate 30 includes a first terminal connection portion 32 disposed at a corresponding location to a winding core hollow portion 29 of the electrode assembly 20, and a first electrode connection portion 31 disposed around the first terminal connection portion 32. The first electrode connection portion 31 is disposed at the central portion of the first current collector plate 30 and is provided in a manner of covering at least a part of the winding core hollow portion 29 of the electrode assembly 20 in the axial direction. The first electrode connection portion 31 is spaced apart from the first terminal connection portion 32 in the radial direction and extends radially. The first electrode connection portion 31 includes a plurality of first electrode connection portions 31 arranged spaced apart from each other along the circumferential direction.

The first terminal connection portion 32 and the first electrode connection portion 31 are physically and electrically connected to each other through a conductive portion 33. The conductive portion 33 includes a radial extension portion 331 extending radially from the first electrode connection portion 31, and a circumferential extension portion 332 extending from the centrifugal side end portion of the radial extension portion in the circumferential direction. The radial extension portion 331 and the first electrode connection portion 31 are spaced apart from each other in an alternating manner along the circumferential direction. The circumferential extension portion 332 is located on the centrifugal side end portion of the first electrode connection portion 31.

The first electrode connection portion 31 is joined to the notching tabs 27 of the first electrode of the electrode assembly 20 by laser welding before placing the electrode assembly 20 in the can. The laser welding line may extend radially.

Referring to FIG. 6, the second current collector plate 40 includes a central portion, a bridge and a circumferential portion.

The central portion is electrically connected to the electrode assembly. The circumferential portion is disposed around the central portion.

The central portion includes a second electrode connection portion 41 including a ring portion 410 of a ring shape having a hole at the center, and an expansion portion 411 extending outward from the ring portion 410 in the radial direction. Additionally, the second current collector plate 40 includes the bridge 43 extending radially from the ring portion 410, and a centripetal end portion of the bridge 43 is connected to the ring portion 410. Additionally, the circumferential portion includes a second terminal connection portion 42 of an outer ring shape connected to a centrifugal end portion of the bridge 43. That is, the circumferential portion is disposed at the outer side of the second electrode connection portion in the radial direction.

The second electrode 22 and the second current collector plate 40 are joined and electrically connected to each other through a laser welding line extending radially along the expansion portion 411 and the ring portion 410.

The bridge 43 is disposed between the expansion portions 411 in the circumferential direction. The bridge 43 has a step portion 430 and the step portion 430 is stepped such that at least a part of the bridge 43 and the second terminal connection portion 42 are offset outwards in axial direction.

The second terminal connection portion 42 has a ring shape with an "L" cross-sectional shape extending outward in the radial direction and then extending from the end portion in the axial direction.

The second electrode connection portion 41 may be joined to the notching tabs 27 of the second electrode 22 of the electrode assembly 20 by laser welding before placing the electrode assembly 20 in the can 10. The laser welding line may extend radially.

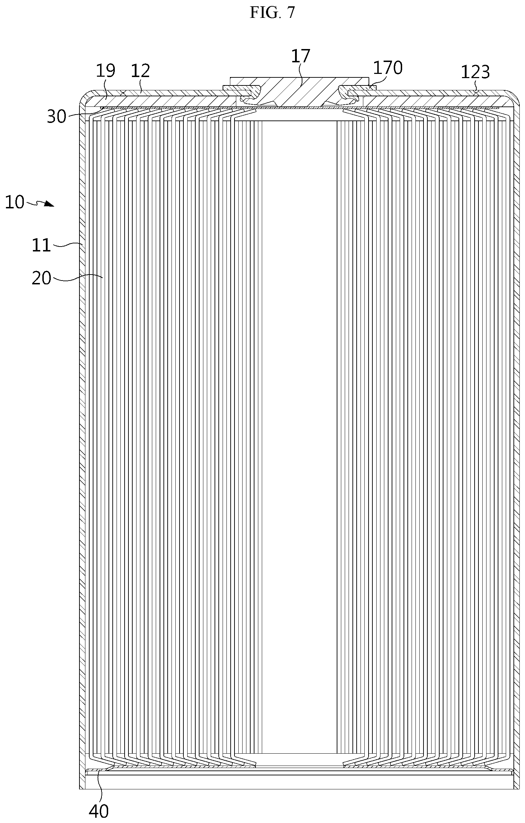

Referring to FIG. 7, the can 10 includes a sidewall portion 11 extending in the axial direction between a first end portion and a second end portion, and a bottom portion 12 connected to the second end portion of the sidewall portion 11 and extending in the radial direction. The first end portion of the sidewall portion 11 is open and defines the opening of the can 10.

The opening may be hermetically closed with a cap 16 after the electrode assembly 20 is housed in the can 10.

The bottom portion 12 may have a disc shape, and the sidewall portion 11 may have a circular tubular shape.

The bottom portion 12 and the sidewall portion 11 may be manufactured by forming a metal sheet of steel plated with nickel on the surface by deep drawing, and trimming with a punch while a blank holder is holding the edges of the sidewall portion 11. The material of the can 10 is not limited thereto.

The bottom portion 12 has a hole at the center, and a first electrode terminal 17 may fit into the hole. The first electrode terminal 17 may be secured to the bottom portion 12 by riveting with a terminal gasket 170 is interposed therebetween. The terminal gasket 170 may be positioned between the first electrode terminal 17 and the bottom portion 12 to form a seal between the inside and the outside of the bottom portion 12, thereby preventing electrolyte leaks and electrically insulating the first electrode terminal 17 from the bottom portion 12.

However, the method of connecting the first electrode terminal 17 to the can 10 is not limited thereto, and may include any method for forming a seal between the first electrode terminal 17 and the can 10 and electrically insulating the first electrode terminal 17 from the can 10, and for example, bolt-nut fastening, glass sealing or chrome coating & PP-MAH thermal bonding.

Considering the fact that the cap 16 is relatively thick, the battery cell 72 may be vented through the bottom portion 12. To this end, the bottom portion 12 includes a notching vent portion 123. The notching vent portion 123 is an area having a smaller thickness than the thickness of the adjacent bottom portion. The notching vent portion 123 may include at least one notching vent portion 123. The notching vent portion 123 is an area having lower strength by reducing the thickness of the bottom portion 12. Accordingly, when the internal pressure of the battery cell increases, the notching vent portion 123 ruptures to open the bottom portion 12, thereby preventing the battery cell from exploding.

The notching vent portion 123 may be formed in an "O" or "C" shape along the circumferential direction of the bottom portion. The first electrode terminal 17 may have a first polarity, and the can 10 may have a second polarity.

Accordingly, the first electrode terminal 17 and a second electrode terminal 14 which is the bottom portion 12 may be positioned at the second end portion of the battery cell. Accordingly, a busbar connected to the first electrode terminal 17 of the battery cell and a busbar connected to the second electrode terminal 14 may be located at the top of the battery cell.

In an example, the first electrode terminal 17 may be a positive electrode terminal and the second electrode terminal 14 may be a negative electrode terminal, or vice versa.

The electrode assembly 20 is housed in the can 10 in an aligned state such that the first current collector plate 30 faces the bottom portion 12 of the can 10. Additionally, an insulator 19 may be interposed between the first current collector plate 30 and the bottom portion 12 to electrically insulate them from each other.

The first electrode terminal 17 secured to the can 10 may be joined, secured and electrically connected to the surface of the first terminal connection portion 32 of the first current collector plate 30 by a thermal bonding method, for example, welding. The first electrode terminal 17 of the can 10 and the first terminal connection portion 32 may be connected after the electrode assembly 20 is placed in the can 10.

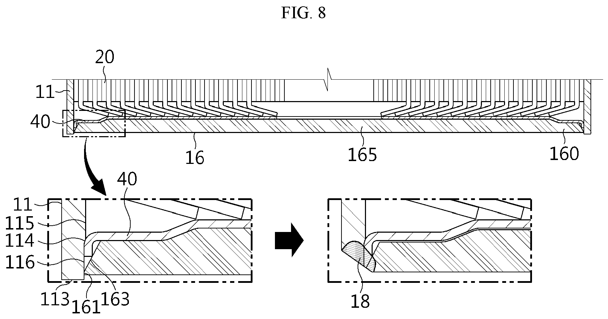

Referring to FIG. 8, the cap 16 covers the opening at the first end portion of the can. The cap 16 includes a body portion 165 at the central portion, and an edge portion 160 connected to the circumference of the body portion 165. The body portion 165 has a larger thickness than the edge portion 160. The edge portion 160 may be electrically connected to the first end portion of the sidewall portion 11 and the circumferential portion of the current collector plate 40.

The edge portion 160 of the cap 16 is disposed at a corresponding location to an outer position than the step portion 430 of the second current collector plate 40 in the radial direction. As described above, a profile of the inner surface of the cap 16 in the axial direction and a profile of the outer surface of the second current collector plate 40 in the axial direction may be complementary to each other. In contrast, the outer surface of the cap 16 in the axial direction is flat.

The second terminal connection portion 42 of the second current collector plate 40 includes a portion extending outward in the axial direction, and its outer circumferential surface is joined to the inner circumferential surface of the sidewall portion 11. Additionally, the sidewall portion 11 may have a predetermined step portion on the inner circumferential surface, and the inner end portion of the second terminal connection portion 42 in the axial direction and the step portion may fit together in the axial direction.

The edge portion 160 of the cap 16 includes a plate contact portion 163 that at least contacts the outer end portion of the second terminal connection portion 42 of the second current collector plate 40 in the axial direction, and a can contact portion 161 that contacts the inner circumferential surface of the sidewall portion 11 in the radial direction.

The sidewall portion 11 may have an inner diameter expansion portion 114 at the first end portion side. The inner diameter expansion portion 114 may have a lateral step shape along the inner surface of the sidewall portion 11 in the radial direction. Accordingly, the inner surface of the sidewall portion 11 in the radial direction may include a first inner surface 115 disposed at the inner position than the inner diameter expansion portion 114 in the axial direction, i.e., further away from the opening of the open end portion of the sidewall portion 11, and a second inner surface 116 disposed at the outer position than the inner diameter expansion portion 114 in the axial direction, i.e., closer to the opening of the open end portion of the sidewall portion 11.

The second inner surface 116 may have a larger inner diameter than the first inner surface 115. Accordingly, the sidewall portion 11 may have a second thickness that is smaller than a first thickness, wherein the first thickness is measured in the radial direction at a location where the first inner surface 115 is present, and the second thickness is measured in the radial direction at a location where the second inner surface 116 is present.

The outer circumferential surface of the circumferential portion of the second current collector plate 40 (for example, the outer circumferential surface of the second terminal connection portion) contacts the inner circumferential surface of the sidewall portion 11 (for example, the inner surface of the first end portion) and they are electrically connected to each other. For example, the outer circumferential surface of the circumferential portion of the second current collector plate 40 may contact the inner diameter extension portion 114 and the second inner surface 116.

The sidewall portion 11 has an overhang portion 113 that protrudes further outward in the axial direction than the cap 16. With the overhang portion 113, laser seam welding of the contact area of the cap 16, the can 10 and the second current collector plate may form a weld portion 18 where triple-welding is done. That is, the first end portion of the sidewall portion 11, the edge portion 160 of the cap and the circumferential portion of the second current collector plate 40 may be welded to each other. By the weld portion 18, the second current collector plate 40, the sidewall portion 11 and the cap 16 may be held together and electrically connected to each other, and the contact area of the sidewall portion 11 and the cap 16 may be sealed.

Meanwhile, before covering the opening with the cap 16, an electrolyte solution may be injected into the can 10. After the electrolyte solution is fed, the opening is covered with the cap 16. The electrolyte solution may be injected through an injection port after covering the opening with the cap 16.

The inner surface of the cap 16 in the axial direction has a shape complementary to the second current collector plate 40, and the outer surface of the cap 16 in the axial direction is flat. Accordingly, heat generated from the electrode assembly 20 may be quickly released into the atmosphere through the bottom of the battery cell 72 via the second current collector plate 40 and the cap 16.

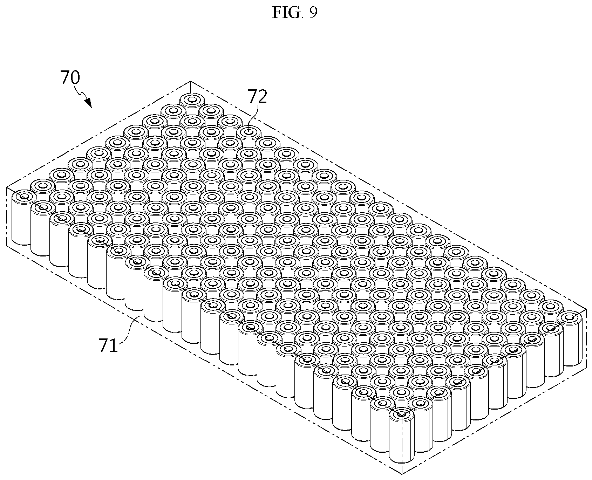

The battery cell 72 may be housed in a pack housing 71 of a battery pack 70 as shown in FIG. 9. The battery pack 70 may be formed using a battery module which is an intermediate form of assembly, or the battery pack 70 may be directly formed without a battery module as shown.

Because the battery cell 72 has a large volume, the battery cell 72 may easily form the battery pack 70 without a battery module or an intermediate structure. In addition, the battery cell 72 has lower internal resistance and higher energy density. Accordingly, the energy density of the battery pack 70 including the battery cell 72 may be improved.

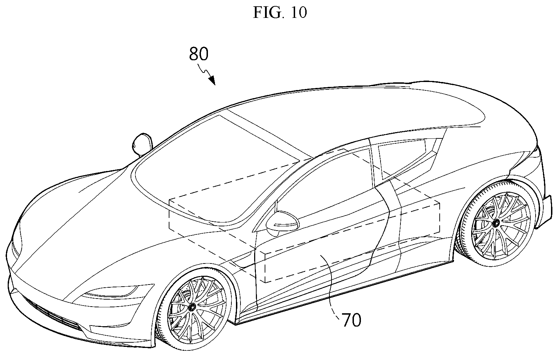

The battery pack 70 with increased energy density may reduce the volume and load while storing the same amount of energy. Accordingly, when the battery pack 70 including the battery cell 72 is mounted on a vehicle 80 using electricity as an energy source as shown in FIG. 10, mileage of the vehicle relative to energy may be increased.

The battery cell 72 dissipates heat generated from the electrode assembly 20 downwards through the second electrode 22, the second current collector plate 40 and the cap 16 quickly. Accordingly, when the battery pack 70 has the cooling structure at the bottom, rapid cooling of the battery cell 72 may be achieved.

It should be understood that the above-described embodiments are provided to describe the present disclosure by way of illustration all over the aspects, but not intended to be limiting, and the scope of the present disclosure will be defined by the appended claims rather than the above detailed description. Additionally, it should be interpreted that the meaning and scope of the appended claims and all changes and modifications that can be derived from the equivalent concept are included in the scope of the present disclosure.

Although the present disclosure has been hereinabove described with reference to the accompanying drawings, the present disclosure is not limited to the disclosed embodiments and the accompanying drawings, and it is obvious that various modifications and changes may be made thereto by those skilled in the art within the scope of the present disclosure. In addition, even though the effects of configuration of the present disclosure are not explicitly described in the description of the embodiments of the present disclosure, the effects of the present disclosure may include predictable effects of the corresponding configuration.

## Claims

1. A battery cell comprising:
a can having a sidewall portion extending in an axial direction, an opening present at a first end portion of the sidewall portion in the axial direction, and a bottom portion connected to a second end portion of the sidewall portion in the axial direction;
an electrode assembly having a first electrode and a second electrode, the electrode assembly housed in the can;
a current collector plate including a central portion and a circumferential portion disposed around the central portion, the current collector plate electrically connected to the electrode assembly; and
a cap covering the opening of the can, and including a body portion and an edge portion,
wherein the bottom portion includes at least one notching vent portion,
wherein the central portion is electrically connected to a second electrode of the electrode assembly,
wherein the circumferential portion contacts the first end portion of the sidewall portion and the edge portion of the cap, and
wherein the first end portion of the sidewall portion, the edge portion of the cap and the circumferential portion are electrically connected to each other.

2. The battery cell according to claim 1,
wherein the notching vent portion has a smaller thickness than a thickness of the adjacent bottom portion.

3. The battery cell according to claim 1,
wherein the current collector plate is a second current collector plate, the central portion includes a second electrode connection portion electrically connected to the second electrode of the electrode assembly, and the circumferential portion includes a second terminal connection portion disposed at an outer side of the second electrode connection portion in a radial direction, and
wherein the battery cell further comprises:
a first electrode terminal electrically insulated from the can and installed through a hole present in the can; and
a first electrode plate including a first electrode connection portion electrically connected to the first electrode of the electrode assembly, and a first terminal connection portion electrically connected to the first electrode terminal.

4. The battery cell according to claim 3,
wherein the second current collector plate includes a bridge including a step portion disposed at the outer side of the second electrode connection portion in the radial direction, the step portion being offset outwards from the second electrode connection portion in the axial direction, the bridge extending in the radial direction, and the second terminal connection portion extending outward in the axial direction from an outer end portion of the bridge in the radial direction.

5. The battery cell according to claim 3,
wherein an outer circumferential surface of the second terminal connection portion contacts an inner circumferential surface of the sidewall portion.

6. The battery cell according to claim 3,
wherein an end portion of the second terminal connection portion in the axial direction contacts the edge portion of the cap, facing each other in the axial direction.

7. The battery cell according to claim 4,
wherein a thickness of the edge portion is smaller than a thickness of the body portion, and
wherein the edge portion is disposed at a corresponding location to an outer position in the radial direction than the step portion of the bridge of the second current collector plate in the radial direction.

8. The battery cell according to claim 1,
wherein the first end portion of the sidewall portion, the edge portion of the cap and the circumferential portion of the current collector plate are welded to each other.

9. The battery cell according to claim 8,
wherein an outer circumferential surface of the edge portion of the cap and an inner circumferential surface of the sidewall portion, facing each other in the radial direction, are joined by the welding.

10. The battery cell according to claim 1,
wherein the electrode assembly has a structure in which the first electrode and the second electrode are wound around a winding core hollow portion extending in the axial direction with a separator interposed between the first electrode and the second electrode.

11. A battery pack comprising:
the battery cell according to any one of claims 1 to 10; and
a pack case accommodating the battery cell.

12. The battery pack according to claim 11,
wherein the battery cell is placed in the pack case such that the cap contacts a bottom of the pack case and the first electrode terminal faces upward.

13. The battery pack according to claim 12,
wherein a cooling structure for cooling the battery cell through the cap of the battery cell is present at the bottom of the pack case.

14. A vehicle comprising the battery pack according to claim 11,
wherein the vehicle is powered by a power source from the battery pack.
